# EUROPÄISCHE PATENTSCHRIFT

(11) **EP 3 454 401 B1**
(45) Veröffentlichungstag und Bekanntmachung des Hinweises auf die Patenterteilung: **19.05.2021**
(21) Anmeldenummer: 18191416.9
(22) Anmeldetag: 29.08.2018
(51) Int. Cl.: H01M 6/50, B60H 1/00, B60H 1/32, B60K 11/02

(54) **KRAFTFAHRZEUG MIT EINEM KÜHLSYSTEM**
MOTOR VEHICLE WITH A COOLING SYSTEM
VÉHICULE AUTOMOBILE POURVU D'UN SYSTÈME DE REFROIDISSEMENT

(30) Priorität: 07.09.2017 DE 102017120615
(43) Veröffentlichungstag der Anmeldung: 13.03.2019
(73) Patentinhaber: VOLKSWAGEN AKTIENGESELLSCHAFT, 38440 Wolfsburg (DE)
(72) Erfinder: LUCKE, Stefan, 38446 Wolfsburg (DE); SCHULZE, Tobias, 38551 Ribbesbüttel (DE); STELZNER, Robert, 38448 Wolfsburg (DE); REUTERS, Ulf, 29348 Eschede (DE)
(74) Vertreter: Bungartz, Florian

(56) Entgegenhaltungen:
- CN-A- 106 585 414
- DE-A1-102012 108 043
- DE-A1-102014 201 747
- DE-A1-102015 220 623
- US-A1- 2005 133 215
- US-A1- 2016 107 505
- US-A1- 2017 158 081

## Beschreibung

Die Erfindung betrifft ein elektrisches, d.h. einen elektrischen Traktionsmotor aufweisendes Kraftfahrzeug mit einem Kühlsystem.

Das Kühlsystem eines elektrischen Kraftfahrzeugs, unabhängig davon, ob dieses in Form eines Hybridfahrzeugs oder als reines Elektrofahrzeug ausgebildet ist, unterscheidet sich in erheblichem Maße von einem Kühlsystem eines ausschließlich mittels eines Verbrennungsmotors angetriebenen Kraftfahrzeugs. Dies gilt nicht nur, weil bei einem solchen elektrischen Kraftfahrzeug, gegebenenfalls zusätzlich, Komponenten des elektrischen Traktionssystems, insbesondere der elektrische Traktionsmotor und eine zur Versorgung dieses Traktionsmotors mit elektrischer Energie vorgesehene Traktionsbatterie, gekühlt werden müssen, sondern insbesondere auch, weil für diese Komponenten des elektrischen Traktionssystems häufig unterschiedliche Temperaturniveaus mittels des Kühlsystems eingehalten werden müssen. Beispielsweise kann es erforderlich sein, dass ein vorgesehener Betriebstemperaturbereich für die Traktionsbatterie deutlich unterhalb des vorgesehenen Betriebstemperaturbereichs für den elektrischen Traktionsmotor liegt, was bedingen kann, diese durch separate Kühlmittelströmungen mit unterschiedlichen Kühlmitteltemperaturen zu kühlen.

Kühlsysteme für elektrische Kraftfahrzeuge sind beispielsweise aus der DE 10 2007 004 979 A1, der DE 10 2012 024 080 A1, der DE 10 2015 101 186 A1, der DE 10 2015 208 862 A1, der DE 10 2015 220 623 A1, der DE 10 2012 108 043 A1 und der US 2016/107505 A1 bekannt. Die darin offenbarten Kühlsysteme sind jedoch funktional eingeschränkt oder relativ aufwändig ausgestaltet.

Der Erfindung lag die Aufgabe zugrunde, ein Kühlsystem für ein elektrisches Kraftfahrzeug anzugeben, das einen möglichst einfachen Aufbau aufweist.

Diese Aufgabe wird mittels eines Kühlsystems eines Kraftfahrzeugs gemäß dem Patentanspruch 1 gelöst. Ein Verfahren zum Betreiben eines solchen Kraftfahrzeugs ist Gegenstand des Patentanspruchs 9. Vorteilhafte Ausgestaltungsformen des erfindungsgemäßen Kraftfahrzeugs und bevorzugte Ausführungsformen des erfindungsgemäßen Verfahrens sind Gegenstände der weiteren Patentansprüche und/oder ergeben sich aus der nachfolgenden Beschreibung der Erfindung.

Erfindungsgemäß ist ein elektrisches Kraftfahrzeug vorgesehen, das ein Kühlsystem aufweist , das zumindest einen elektrischen Traktionsmotor (bzw. einen oder mehrere Kühlkanäle davon), einen Umgebungswärmetauscher, einen Bypass zum Umgebungswärmetauscher, eine Traktionsbatterie (bzw. einen oder mehrere Kühlkanäle davon), eine vorzugsweise elektrische Kühlmittelheizvorrichtung, einen Kühlmittel-Kältemittel-Wärmetauscher eines Klimageräts, eine erste Kühlmittelpumpe und eine zweite Kühlmittelpumpe umfasst, die über Kühlmittelleitungen und ein Verteilsystem direkt oder indirekt fluidleitend miteinander verbunden oder verbindbar sind.

Als "Umgebungswärmetauscher" wird dabei ein Wärmetauscher, in dem eine Kühlung von Kühlmittel des Kühlsystems durch einen Übergang von Wärmeenergie auf Umgebungsluft, die den Wärmetauscher durch- und/oder umströmt, erfolgen kann, verstanden.

Als "Klimagerät" wird eine Vorrichtung verstanden, mittels der Luft, die einem Innenraum des Kraftfahrzeugs zugeführt werden soll, temperiert werden kann, was sowohl ein Aufheizen als auch ein Abkühlen der Luft erfordern kann. Das Klimagerät kann dabei vorzugsweise in Form einer Kreisprozessvorrichtung zur Durchführung eines thermodynamischen Kreisprozesses ausgeführt sein und hierzu in einem ein Kältemittel aufnehmenden Kreislaufsystem zumindest einen Verdichter zur Verdichtung des dann gasförmigen Kältemittels, einen Kondensator zum Verflüssigen des zuvor gasförmigen Kältemittels unter Abgabe von Wärmeenergie, eine Drossel zum Reduzieren des Drucks des dann flüssigen Kältemittels sowie einen Verdampfer zum Verdampfen des zuvor flüssigen Kältemittels unter Aufnahme von Wärmeenergie integriert. Weiterhin kann eine solche Kreisprozessvorrichtung des Klimageräts noch eine Pumpe zum Fördern des Kältemittels innerhalb des Kreislaufsystems umfassen. Zudem kann es vorteilhaft sein, dass das Klimagerät zusätzlich noch einen vorzugsweise elektrischen Zuheizer umfasst, dessen Wärmeenergie direkt oder indirekt, d.h. über das Kältemittel, auf die dem Innenraum des Kraftfahrzeugs zuzuführende Luft übertragbar ist. Bei einer eine solche Kreisprozessvorrichtung umfassenden Ausgestaltung des Klimageräts kann insbesondere vorgesehen sein, dass es sich bei dem in das Kühlsystem integrierten Kühlmittel-Kältemittel-Wärmetauscher um den Verdampfer der Kreisprozessvorrichtung handelt.

Die fluidleitende Verbindung zwischen den genannten Komponenten eines erfindungsgemäßen Kraftfahrzeugs ist derart vorgesehen, dass in einer ersten Funktionsstellung des Verteilsystems 5. August 2019 einerseits (insbesondere flüssiges) Kühlmittel mittels der ersten Kühlmittelpumpe in einem den Traktionsmotor, den Bypass zu dem Umgebungswärmetauscher und den Kühlmittel-Kältemittel-Wärmetauscher umfassenden ersten Kühlmittelkreislauf förderbar ist. In der ersten Funktionsstellung des Verteilsystems kann demnach, einem erfindungsgemäßen Verfahren entsprechend, vorgesehen sein, Wärmeenergie, die in dem Kühlmittel-Kältemittel-Wärmetauscher von dem den ersten Kühlmittelkühlkreislauf durchströmenden Kühlmittel auf ein Kältemittel des Klimageräts übergeht, zum Heizen eines Innenraums des Kraftfahrzeugs zu nutzten. Dadurch kann entweder ein Zuheizer des Klimageräts überflüssig werden oder die von diesem zum Heizen der dem Innenraum des Kraftfahrzeugs zuzuführenden Luft aufzubringende Heizleistung gering gehalten werden, was einerseits ermöglicht, den Zuheizer relativ klein und damit leicht sowie kostengünstig zu dimensionieren sowie die diesem zur Wandlung in Wärmeenergie zuzuführende Energie gering zu halten. Bei einer elektrischen Ausgestaltung des Zuheizers kann sich dies besonders vorteilhaft auf die elektrische Reichweite des Kraftfahrzeugs auswirken.

Bei einer eine Kreisprozessvorrichtung zumindest umfassenden Ausgestaltung des Klimageräts kann vorgesehen sein, dieses in der ersten Funktionsstellung des Verteilsystems als Wärmepumpe zu betreiben, so dass die in dem Kühlmittel-Kältemittel-Wärmetauscher aufgenommen Abwärme des ersten Kühlmittelkreislaufs, zusammen mit insbesondere von dem Verdichter in das Kältemittel eingebrachter Energie (Überdruck), als Nutzwärme in dem Kondensator auf die zur Temperierung des Innenraums des Kraftfahrzeugs vorgesehene Luft übertragen wird. Da die von dem Kühlmittel bei der Durchströmung des ersten Kühlmittelkreislaufs aufgenommene Wärmeenergie (Abwärme) möglichst ausschließlich zum Heizen des Innenraums des Kraftfahrzeugs genutzt werden soll, ist vorgesehen, dass der erste Kühlmittelkreislauf den Bypass zu dem Umgebungswärmetauscher integriert, so dass das Kühlmittel zumindest teilweise und vorzugsweise vollständig über diesen Bypass geführt wird. Der Umgebungswärmetauscher selbst kann demnach vorzugsweise nicht in den ersten Kühlmittelkreislauf integriert sein und demnach auch nicht von dem Kühlmittel durchströmt werden.

Weiterhin ist in der ersten Funktionsstellung des Verteilsystems vorgesehen, dass Kühlmittel mittels der zweiten Kühlmittelpumpe in einem (vorzugsweise neben der zweiten Kühlmittelpumpe ausschließlich) die Traktionsbatterie und die Kühlmittelheizvorrichtung umfassenden zweiten Kühlmittelkreislauf, der von dem ersten Kühlmittelkreislauf getrennt ist, förderbar ist. Dadurch wird ermöglicht, im Rahmen einer Weiterbildung des erfindungsgemäßen Verfahrens, (insbesondere ausschließlich) die Traktionsbatterie mittels der Kühlmittelheizvorrichtung zu temperieren, wodurch diese möglichst schnell und unter einem möglichst geringen Einsatz von durch die Kühlmittelheizvorrichtung zu erzeugender Wärmeenergie bis zum Erreichen eines vorgesehenen Betriebstemperaturbereichs erwärmt werden kann.

Ein Betrieb des Kraftfahrzeugs beziehungsweise des Kühlsystems basierend auf der ersten Funktionsstellung des Verteilsystems kann insbesondere direkt oder kurz nach einem Kaltstart des Kraftfahrzeugs, d.h. einer Inbetriebnahme, nachdem die Komponenten des Kraftfahrzeugs im Wesentlichen vollständig bis auf Umgebungstemperatur abgekühlt waren, bei gleichzeitig relativ niedrigen Umgebungstemperaturen sinnvoll sein, um eine möglichst schnelle und energetisch vorteilhafte Beheizung sowohl des Innenraums des Kraftfahrzeugs als auch der Traktionsbatterie zu erzielen.

Unter einer "Trennung" verschiedener Kühlkreisläufe des Kühlsystems eines erfindungsgemäßen Kraftfahrzeugs wird erfindungsgemäß verstanden, dass zwischen diesen im Betrieb des Kühlsystems, d.h. wenn Kühlmittel mittels der Kühlmittelpumpen gefördert wird, kein relevanter Austausch von Kühlmittel erfolgt.

Erfindungsgemäß ist weiterhin eine zweite Funktionsstellung des Verteilsystems vorgesehen, in der einerseits Kühlmittel mittels der ersten Kühlmittelpumpe in einem den Traktionsmotor und den Umgebungswärmetauscher umfassenden dritten Kühlmittelkreislauf förderbar ist, sowie Kühlmittel mittels der zweiten Kühlmittelpumpe in einem die Traktionsbatterie und den Kühlmittel-Kältemittel-Wärmetauscher umfassenden vierten Kühlmittelkreislauf, der von dem dritten Kühlmittelkreislauf getrennt ist, förderbar ist. In der zweiten Funktionsstellung des Verteilsystems kann demnach, dem erfindungsgemäßen Verfahren entsprechend, vorgesehen sein, Wärmeenergie, die in dem Kühlmittel-Kältemittel-Wärmetauscher von dem den vierten Kühlmittelkühlkreislauf durchströmenden Kühlmittel auf das Kältemittel des Klimageräts übergeht, zum Kühlen der Traktionsbatterie zu nutzen, d.h. es ist dann eine aktive Kühlung der Traktionsbatterie über das in dem vierten Kühlmittelkreislauf zirkulierende Kühlmittel mittels des Klimageräts vorgesehen. Bei einer eine Kreisprozessvorrichtung zumindest umfassenden Ausgestaltung des Klimageräts kann demnach vorgesehen sein, dieses in der zweiten Funktionsstellung des Verteilsystems als Kältemaschine zu betreiben. Gleichzeitig kann vorgesehen sein, dass Abwärme, die von den in den dritten Kühlmittelkreislauf integrierten Komponenten, insbesondere dem Traktionsmotor, auf das darin zirkulierende Kühlmittel übertragen wird, über den dann in die Kühlmittelzirkulation zumindest teilweise, vorzugsweise vollständig integrierten Umgebungswärmetauscher aus dem Kühlsystem beziehungsweise dem Kraftfahrzeug abzuführen.

Ein Betrieb des Kraftfahrzeugs beziehungsweise des Kühlsystems basierend auf der zweiten Funktionsstellung des Verteilsystems kann insbesondere vorgesehen sein, nachdem sämtliche in das Kühlsystem integrierten Komponenten, für die zumindest temporär mittels des Kühlsystems eine Kühlwirkung erzielt werden soll, jeweils einen definierten Betriebstemperaturbereich erreicht haben. Ergänzend dazu kann auch vorgesehen sein, dass die zweite Funktionsstellung des Verteilsystems nur dann eingestellt wird, wenn sich die Temperatur des Kühlmittels stromauf der Traktionsbatterie oberhalb einer definierten Grenztemperatur oder eines definierten Grenztemperaturbereichs, beispielsweise zwischen 25°C und 35°C, wobei die konkrete Grenztemperatur innerhalb dieses Bereichs insbesondere in Abhängigkeit von der Last, mit der der Traktionsmotor betrieben wird, variieren kann, befindet. Durch die aktive Kühlung der Traktionsbatterie mittels des Klimageräts kann dann eine ausreichende Kühlwirkung für die Traktionsbatterie sichergestellt werden.

Eine besonders einfache und dadurch vorteilhafte Verschaltung der Komponenten des Kühlsystems eines erfindungsgemäßen Kraftfahrzeugs kann realisiert werden, wenn ein zumindest den Traktionsmotor, die Kombination aus Umgebungswärmetauscher und dazugehörigem Bypass, die Traktionsbatterie, die erste Kühlmittelpumpe und die zweite Kühlmittelpumpe in Reihe integrierender Hauptkreis vorgesehen ist. Weiterhin ist dann eine die Kühlmittelheizvorrichtung integrierende erste Kurzschlussleitung, die einen die Traktionsbatterie und die zweite Kühlmittelpumpe integrierenden Abschnitt des Hauptkreises überbrückt, sowie eine den Kühlmittel-Kältemittel-Wärmetauscher integrierende zweite Kurzschlussleitung, die einen die Traktionsbatterie, die zweite Kühlmittelpumpe sowie die Verzweigungen zu der ersten Kurzschlussleitung integrierenden Abschnitt des Hauptkreises überbrückt, vorgesehen. Um eine ausreichende Steuerung einer Strömung des Kühlmittels in verschiedenen Abschnitten des Hauptkreises sowie in der ersten Kurzschlussleitung und/oder der zweiten Kurzschlussleitung realisieren zu können, ist zudem in zumindest eine Verzweigung des Hauptkreises zu der ersten Kurzschlussleitung und/oder zu der zweiten Kurzschlussleitung eine Verteilvorrichtung des Verteilsystems integriert. Die Verteilvorrichtung kann dabei vorzugsweise in Form eines aktiv mittels einer Steuerungsvorrichtung des Kraftfahrzeugs ansteuerbaren Ventils, insbesondere in Form eines Schaltventils und/oder eines 3/2-Wege-Ventils, ausgebildet sein.

Gemäß einer bevorzugten Ausgestaltungsform eines erfindungsgemäßen Kraftfahrzeugs kann vorgesehen sein, dass in einer dritten Funktionsstellung des Verteilsystems Kühlmittel mittels der ersten Kühlmittelpumpe in einem (ggf. ausschließlich) den Traktionsmotor und den Bypass zu dem Umgebungswärmetauscher umfassenden fünften Kühlmittelkreislauf förderbar ist. Weiterhin soll dann Kühlmittel mittels der zweiten Kühlmittelpumpe in dem zweiten Kühlmittelkreislauf, der von dem fünften Kühlmittelkreislauf getrennt ist, förderbar sein. Demnach kann vorgesehen sein, dass sich ein Betrieb des Kühlsystems basierend auf der dritten Funktionsstellung des Verteilsystems von demjenigen basierend auf der ersten Funktionsstellung dahingehend unterscheidet, dass keine Abwärme des Kühlsystems zum Heizen des Innenraums des Kraftfahrzeugs genutzt werden soll. Daher kann dann auch vorgesehen sein, dass das den fünften Kühlmittelkreislauf durchströmende Kühlmittel den Kühlmittel-Kältemittel-Wärmetauscher nicht durchströmt beziehungsweise diesen umgeht, um einen erhöhten Strömungswiderstand, der mit einer solchen Durchströmung verbunden wäre, zu vermeiden. Dazu kann ein erfindungsgemäßes Kühlsystem in vorteilhafter Weise eine dritte Kurzschlussleitung umfassen, die einen (vorzugsweise ausschließlich) die Traktionsbatterie, die zweite Kühlmittelpumpe, die Verzweigungen zu der ersten Kurzschlussleitung und die Verzweigungen zu der zweiten Kurzschlussleitung integrierenden Abschnitt des Hauptkreises überbrückt. Um eine Strömung des Kühlmittels über diese dritte Kurzschlussleitung steuern zu können, kann weiterhin bevorzugt in zumindest eine Verzweigung zu der dritten Kurzschlussleitung eine Verteilvorrichtung des Verteilsystems integriert sein. Auch diese Verteilvorrichtung kann vorzugsweise in Form eines aktiv mittels einer Steuerungsvorrichtung des Kraftfahrzeugs ansteuerbaren Ventils, insbesondere in Form eines Schaltventils und/oder eines 3/2-Wege-Ventils, ausgebildet sein.

Grundsätzlich können für die Ausgestaltung des Kühlsystems eines erfindungsgemäßen Kraftfahrzeugs insgesamt lediglich drei Verteilvorrichtungen des Verteilsystems, insbesondere zwei Schaltventile (vorzugsweise 3/2-Wege-Schaltventile) sowie ein Thermostatventil zur bedarfsgerechten Verteilung von Kühlmittel auf den Umgebungswärmetauscher und/oder den dazugehörigen Bypass, ausreichend sein.

Gemäß einer alternativen dritten Funktionsstellung ist auch eine Durchströmung der den Kühlmittel-Kältemittel-Wärmetauscher umfassenden zweiten Kurzschlussleitung anstelle der dann gegebenenfalls nicht vorhandenen dritten Kurzschlussleitung möglich, ohne dass dabei Wärmeenergie, die gegebenenfalls in geringem Maße von dem Kühlmittel auf das Kältemittel übertragen würde, zum Heizen der dem Innenraum des Kraftfahrzeugs zuzuführenden Luft genutzt würde, beispielsweise indem dann eine Kreisprozessvorrichtung des Klimageräts nicht betrieben wird.

Ein Betrieb des Kraftfahrzeugs beziehungsweise des Kühlsystems basierend auf der dritten Funktionsstellung des Verteilsystems kann insbesondere direkt oder kurz nach einem Kaltstart des Kraftfahrzeugs und bei relativ niedrigen Umgebungstemperaturen sinnvoll sein, weil dann ein Beheizen der Traktionsbatterie mittels der Kühlmittelheizvorrichtung über das in dem zweiten Kühlmittelkreislauf separat geförderte Kühlmittel sinnvoll ist. Eine gemäß der dritten Funktionsstellung dagegen nicht vorgesehene Nutzung von Abwärme des fünften Kühlmittelkreislaufs zum Heizen von dem Innenraum des Kraftfahrzeugs zuzuführender Luft kann insbesondere darin begründet sein, dass unmittelbar nach einem Kaltstart zunächst ein Erwärmen des den fünften Kühlmittelkreislauf durchströmenden Kühlmittels erfolgen sollte, bevor mittels dieses Kühlmittels ein ausreichender und möglichst konstanter Wärmeübergang auf das Kältemittel in dem Kühlmittel-Kältemittel-Wärmetauscher (gemäß einem Betrieb basierend auf der ersten Funktionsstellung des Verteilsystems) erfolgen kann. Dabei kann vorgesehen sein, dass nach einem Kaltstart des Kraftfahrzeugs das Kühlsystem zunächst basierend auf der dritten Funktionsstellung betrieben wird, bevor auf einen Betrieb basierend auf der ersten Funktionsstellung umgeschaltet wird. Möglich ist aber auch ein direkter Betrieb des Kühlsystems basierend auf der ersten Funktionsstellung nach einem Kaltstart des Kraftfahrzeugs.

Gemäß einer weiterhin bevorzugten Ausgestaltungsform eines erfindungsgemäßen Kraftfahrzeugs kann vorgesehen sein, dass in einer vierten Funktionsstellung des Verteilsystems Kühlmittel mittels der ersten Kühlmittelpumpe und der zweiten Kühlmittelpumpe in einem den Traktionsmotor, den Umgebungswärmetauscher und die Traktionsbatterie umfassenden sechsten Kühlmittelkreislauf förderbar ist. Demnach kann dabei vorgesehen sein, sämtliche zu kühlenden Komponenten in einen gemeinsamen, nämlich den sechsten Kühlmittelkreislauf zu integrieren und folglich von demselben Kühlmittel durchströmen zu lassen. Dies kann insbesondere dann sinnvoll sein, wenn dieses Kühlmittel eine Temperatur aufweist, die für einen bereits bestehenden Kühlleistungsbedarf der Traktionsbatterie noch ausreichend gering ist oder aufgrund der Durchströmung des Umgebungswärmetauschers ausreichend gering gehalten werden kann. Demnach ist es (noch) nicht erforderlich, das Kühlsystem gemäß einem Betrieb basierend auf der zweiten Funktionsstellung des Verteilsystems in mindestens zwei getrennte Kühlkreisläufe aufzuteilen. Dies kann insbesondere möglich sein, wenn bei der Durchströmung (der Kühlmittelkanäle) des Traktionsmotors aufgenommene Wärmeenergie zumindest teilweise wieder in dem Umgebungswärmetauscher abgeführt wird und das dann relativ kalte Kühlmittels erst anschließend die (Kühlmittelkanäle der) Traktionsbatterie durchströmt. Ein Umschalten eines Betriebs des Kühlsystems basierend auf der vierten Funktionsstellung zu einem Betrieb des Kühlsystems basierend auf der zweiten Funktionsstellung kann insbesondere dann erforderlich werden, wenn die Temperatur des Kühlmittels stromauf der Traktionsbatterie oberhalb eines Grenzwerts oder eines Grenztemperaturbereichs, beispielsweise zwischen 25°C und 35°C, wobei die konkrete Grenztemperatur innerhalb dieses Bereichs insbesondere in Abhängigkeit von der Last, mit der der Traktionsmotor betrieben wird, variieren kann, liegt und daher mittels des Umgebungswärmetauschers und dem den sechsten Kühlmittelkreislauf durchströmenden Kühlmittel keine ausreichende Kühlleistung für die Traktionsbatterie erreicht werden kann.

Gemäß einer weiterhin bevorzugten Ausgestaltungsform eines erfindungsgemäßen Kraftfahrzeugs kann vorgesehen sein, dass in einer fünften Funktionsstellung des Verteilsystems Kühlmittel mittels der ersten Kühlmittelpumpe und der zweiten Kühlmittelpumpe in einem den Traktionsmotor, den Bypass zu dem Umgebungswärmetauscher und die Traktionsbatterie umfassenden siebten Kühlmittelkreislauf förderbar ist. Ein Betrieb des Kühlsystems basierend auf der fünften Funktionsstellung des Verteilsystems kann sich demnach von demjenigen basierend auf der vierten Funktionsstellung lediglich dahingehend unterscheiden, dass der Bypass zu dem Umgebungswärmetauscher (hauptsächlich oder vollständig) von dem Kühlmittel durchströmt wird. Ein Betrieb des Kühlsystems basierend auf dieser fünften Funktionsstellung kann beispielsweise sinnvoll sein, wenn für die Traktionsbatterie bereits ein Kühlleistungsbedarf besteht und gleichzeitig der Traktionsmotor noch nicht seinen vorgesehenen Betriebstemperaturbereich erreicht hat, so dass Wärmeenergie, die bei der Durchströmung (der Kühlkanäle) der Traktionsbatterie auf das den siebten Kühlmittelkreislauf durchströmende Kühlmittel übergeht, zum Aufwärmen des Traktionsmotors und/oder anderer, in diesen siebten Kühlmittelkreislauf ebenfalls integrierter Komponenten genutzt werden kann.

Weitere in das Kühlsystem eines erfindungsgemäßen Kraftfahrzeugs integrierte Komponenten können insbesondere ein DC-DC-Wandler (bzw. eine oder mehrere Kühlkanäle davon) und/oder ein Ladegerät (bzw. eine oder mehrere Kühlkanäle davon) für die Traktionsbatterie und/oder eine Leistungselektronik (bzw. eine oder mehrere Kühlkanäle davon) sein. Diese Komponenten können vorzugsweise
- in der ersten Funktionsstellung in den ersten Kühlmittelkreislauf integriert sein und/oder
- in der zweiten Funktionsstellung in den dritten Kühlmittelkreislauf integriert sein und/oder
- in der dritten Funktionsstellung in den fünften Kühlmittelkreislauf integriert sein und/oder
- in der vierten Funktionsstellung in den sechsten Kühlmittelkreislauf integriert sein und/oder
- in der fünften Funktionsstellung in den siebten Kühlmittelkreislauf integriert sein.

Weiterhin bevorzugt handelt es sich bei dem erfindungsgemäßen elektrischen Kraftfahrzeug um ein Elektrofahrzeug, bei dem folglich die zum Bewegen des Kraftfahrzeugs aufzubringende Fahrantriebsleistung ausschließlich von dem elektrischen Traktionsmotor und gegebenenfalls von einem oder mehreren weiteren elektrischen Traktionsmotoren erzeugt wird. Alternativ kann es sich bei dem elektrischen Kraftfahrzeug um ein Hybridfahrzeug handeln, das neben mindestens einem/dem elektrischen Traktionsmotor noch einen Verbrennungsmotor aufweist, der zumindest zeitweise ebenfalls zur Erzeugung einer Fahrantriebsleistung für das Kraftfahrzeug vorgesehen ist.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in den Zeichnungen dargestellten Ausführungsbeispiels näher erläutert. In den Zeichnungen zeigt, jeweils in schematischer Darstellung:
- Fig. 1:: ein erfindungsgemäßes Kraftfahrzeug bei einem Betrieb des dazugehörigen Kühlsystems basierend auf einer dritten Funktionsstellung eines Verteilsystems des Kühlsystems;
- Fig. 2:: das Kraftfahrzeug bei einem Betrieb des Kühlsystems basierend auf einer ersten Funktionsstellung des Verteilsystems;
- Fig. 3:: das Kraftfahrzeug bei einem Betrieb des Kühlsystems basierend auf einer fünften Funktionsstellung des Verteilsystems;
- Fig. 4:: das Kraftfahrzeug bei einem Betrieb des Kühlsystems basierend auf einer vierten Funktionsstellung des Verteilsystems; und
- Fig. 5:: das Kraftfahrzeug bei einem Betrieb des Kühlsystems basierend auf einer zweiten Funktionsstellung des Verteilsystems.

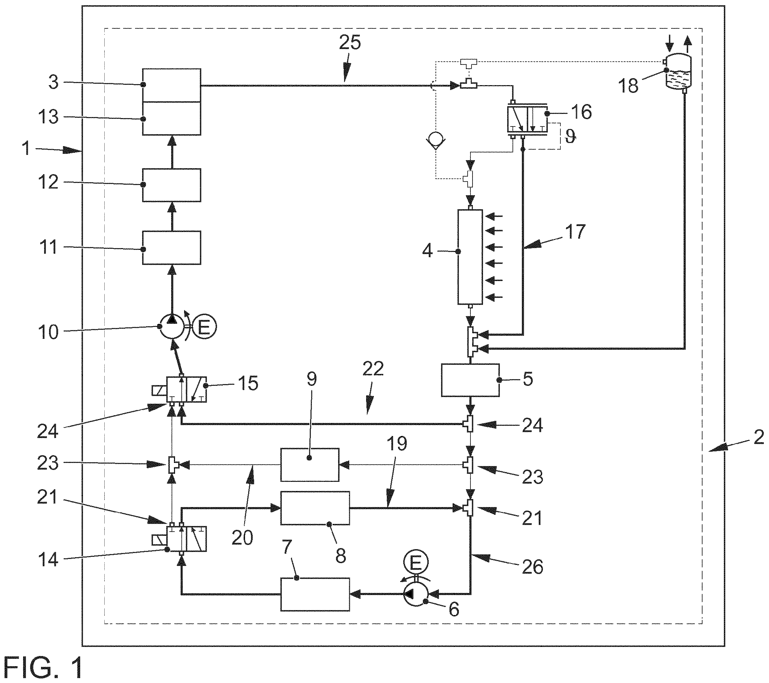

Die Fig. 1 bis 5 zeigen in stark vereinfachten Darstellungen ein erfindungsgemäßes Kraftfahrzeug 1 mit einem Kühlsystem 2. Das Kühlsystem 2 umfasst als zu integrierende Komponenten einen elektrischen Traktionsmotor 3, einen Umgebungswärmetauscher 4, einen DC-DC-Wandler 5, eine zweite elektrische Kühlmittelpumpe 6, eine Traktionsbatterie 7, eine elektrische Kühlmittelheizvorrichtung 8, einen Kühlmittel-Kältemittel-Wärmetauscher 9 eines im Übrigen nicht dargestellten Klimageräts, eine erste elektrische Kühlmittelpumpe 10, ein erstes Ladegerät 11 zum Laden der Traktionsbatterie 7, das auf einer induktiven Energieübertragung beruht, ein zweites Ladegerät 12 zum Laden der Traktionsbatterie 7, bei dem eine elektrisch leitende Verbindung mit einer elektrischen Energiequelle mittels einer Steckverbindung herzustellen ist, sowie eine dem Traktionsmotor 3 zugeordnete Leistungselektronik 13, die insbesondere einen Pulswechselrichter umfassen kann. Diese Komponenten des Kühlsystems sind mittels einer Mehrzahl von Kühlmittelleitungen sowie mittels eines Verteilsystems, das insgesamt zwei 3/2-Wege-Schaltventile 14, 15 sowie ein Thermostatventil 16, das beispielsweise in Form eines rein passiven, mittels eines Dehnstoffelements betätigten Ventils ausgebildet sein kann, umfasst. Weiterhin ist ein Bypass 17 zu dem Umgebungswärmetauscher 4 vorgesehen, wobei eine Steuerung der Strömung von Kühlmittel über den Umgebungswärmetauscher 4 und/oder den Bypass 17 mittels des Thermostatventils 16 steuerbar ist. Beispielsweise kann vorgesehen sein, dass das Thermostatventil 16 bei einer Temperatur von an diesem anliegenden Kühlmittel (und damit von dessen Dehnstoffelement) von ca. 15°C beginnt zu öffnen und bei einer Temperatur von ca. 25°C vollständig geöffnet ist. Bei einer Temperatur des an dem Thermostatventil 16 anliegenden Kühlmittels von weniger als ca. 15°C wird demnach der gesamte Mengenstrom des an dem Thermostatventil 16 ankommenden Kühlmittels über den Bypass 17 und bei einer Temperatur oberhalb von ca. 25°C vollständig über den Umgebungswärmetauscher 4 geführt. Bei einer Temperatur zwischen 15°C und 25°C erfolgt dagegen eine temperaturabhängige Aufteilung. Das Kühlsystem weist weiterhin in bekannter Weise einen Ausgleichsbehälter 18 auf.

Die Verschaltung der Komponenten mittels der Kühlmittelleitungen und der beiden Schaltventile 14, 15 ist derart gewählt, dass der Traktionsmotor 3, die Kombination aus Umgebungswärmetauscher 4 und dazugehörigem Bypass 17, der DC-DC-Wandler 5, die zweite Kühlmittelpumpe 6, die Traktionsbatterie 3, die erste Kühlmittelpumpe 10, das erste Ladegerät 11, das zweite Ladegerät 12 sowie die Leistungselektronik 13 in Reihe in einen Hauptkreis des Kühlsystems integriert sind und folglich nacheinander von demselben Kühlmittel in einem dem Hauptkreis entsprechenden Kühlmittelkreislauf durchströmt würden. Weiterhin ist die Verschaltung derart gewählt, dass der Traktionsmotor 3, der DC-DC-Wandler 5 sowie die Ladegeräte 11, 12 bei einem Betrieb zumindest der ersten Kühlmittelpumpe 10 stets gemeinsam (seriell) durchströmt würden. Diese Komponenten des Kühlsystems werden nachfolgend zur Vereinfachung auch als Hochtemperatur-Kühlkomponenten bezeichnet.

Die Kühlmittelheizvorrichtung 8 ist dagegen in eine erste Kurzschlussleitung 19 integriert, die einen die Traktionsbatterie 7 und die zweite Kühlmittelpumpe 6 umfassenden Abschnitt des Hauptkreises überbrückt. Zudem ist der Kühlmittel-Kältemittel-Wärmetauscher 9 in eine zweite Kurzschlussleitung 20 integriert, die einen die Traktionsbatterie 7, die zweite Kühlmittelpumpe 6 sowie die Verzweigungen 21 zu der ersten Kurzschlussleitung 19 integrierenden Abschnitt des Hauptkreises überbrückt. Weiterhin ist eine dritte Kurzschlussleitung 22 vorgesehen, die einen die Traktionsbatterie 7, die zweite Kühlmittelpumpe 6, die Verzweigungen 21 zu der ersten Kurzschlussleitung 19 sowie die Verzweigungen 23 zu der zweiten Kurzschlussleitung 20 integrierenden Abschnitt des Hauptkreises überbrückt. In die stromab bezüglich der für die zweite Kühlmittelpumpe 6 vorgesehenen Förderrichtung gelegene Verzweigung 21 des Hauptkreises zu der ersten Kurzschlussleitung 19 ist eine erstes (14) der Schaltventile 14, 15 des Verteilsystems integriert. In Abhängigkeit von der Schaltstellung dieses ersten Schaltventils 14 wird von der Traktionsbatterie 7 kommendes Kühlmittel entweder weiter entlang des Hauptkreises oder in die erste Kurzschlussleitung 19 geführt. In die auf der Saugseite der ersten Kühlmittelpumpe 10 gelegene Verzweigung 24 des Hauptkreises zu der dritten Kurzschlussleitung 22 ist das zweite (15) der Schaltventile 14, 15 des Verteilsystems integriert. In Abhängigkeit von der Schaltstellung dieses zweiten Schaltventils 15 wird von dem DC-DC-Wandler 5 kommendes Kühlmittel entweder weiter entlang des Hauptkreises oder in die dritte Kurzschlussleitung 22 geführt.

Die Fig. 1 bis 5 zeigen dasselbe Kühlsystem in unterschiedlichen Betriebsarten, die auf verschiedenen Funktionsstellungen des Verteilsystems beziehungsweise der Schaltventile 14, 15 und des Thermostatventils 16 basieren. Dabei sind diejenigen Kühlmittelleitungen (einschließlich des Bypasses 17), über die in den jeweiligen Betriebsarten relevante Mengenströme des Kühlmittels geführt wird, mit dickerer Strichstärke im Vergleich zu denjenigen Kühlmittelleitungen, für die dies nicht gilt, dargestellt.

Die Fig. 1 zeigt einen Betrieb des Kühlsystems basierend auf einer dritten Funktionsstellung des Verteilsystems. Dabei wird Kühlmittel mittels der ersten Kühlmittelpumpe 10 in einem (ausschließlich) die Hochtemperatur-Kühlkomponenten und den Bypass 17 zu dem Umgebungswärmetauscher 4 umfassenden fünften Kühlmittelkreislauf gefördert. Weiterhin wird Kühlmittel mittels der zweiten Kühlmittelpumpe 6 in dem von dem fünften Kühlmittelkreislauf 25 getrennten zweiten Kühlmittelkreislauf 26, der ausschließlich die Traktionsbatterie 7 und die Kühlmittelheizvorrichtung 8 umfasst, gefördert. Ein solcher Betrieb des Kühlsystems ist nach einem Kaltstart des Kraftfahrzeugs 1 bei relativ niedrigen Umgebungs- und dadurch auch Zelltemperaturen (z.B. < 0°C, in Abhängigkeit von dem konkreten Typ der Batteriezellen) der Traktionsbatterie 7 vorgesehen, so dass für die Traktionsbatterie 7 ein Heizleistungsbedarf besteht, um diese möglichst schnell bis zum Erreichen zumindest einer unteren Grenze eines für diese vorgesehenen Betriebstemperaturbereichs zu erwärmen. Dies wird durch eine Zirkulation von Kühlmittel in dem zweiten Kühlmittelkreislauf 26 erreicht, bei der Wärmeenergie von der Kühlmittelheizvorrichtung 8 auf das Kühlmittel und von diesem wiederum auf die Traktionsbatterie 7 übertragen wird. Gleichzeitig wird Kühlmittel in dem fünften Kühlmittelkreislauf 25 gefördert, wodurch Wärmeenergie von insbesondere dem Traktionsmotor 3, dem DC-DC-Wandler 5 und der Leistungselektronik 13 auf das in dem fünften Kühlmittelkreislauf 25 strömende Kühlmittel übertragen wird, um dieses zu erwärmen.

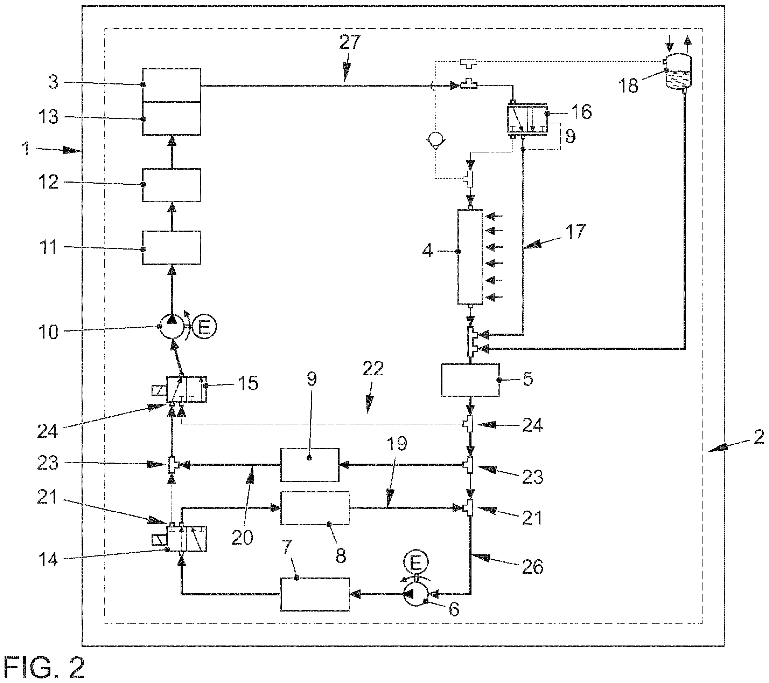

Sobald dieses den fünften Kühlmittelkreislauf 25 durchströmende Kühlmittel eine ausreichend hohe Temperatur erreicht hat, kann auf einen Betrieb des Kühlsystems basierend auf einer ersten Funktionsstellung gemäß der Fig. 2 umgeschaltet werden. Alternativ ist aber auch ein Betrieb des Kühlsystems basierend auf der ersten Funktionsstellung direkt nach einem Kaltstart des Kraftfahrzeugs 1 bei relativ niedrigen Umgebungs- und dadurch auch Zelltemperaturen möglich.

Der Betrieb basierend auf der ersten Funktionsstellung gemäß der Fig. 2 unterscheidet sich von demjenigen gemäß der Fig. 1 lediglich dahingehend, dass das Kühlmittel, das zuvor in dem fünften Kühlmittelkreislauf 25 zirkuliert ist, infolge eines Umschaltens des zweiten Schaltventils 15 nicht mehr durch die dritte Kurzschlussleitung 22 sondern durch die den Kühlmittel-Kältemittel-Wärmetauscher 9 umfassende zweite Kurzschlussleitung 20 strömt und dadurch innerhalb eines ersten Kühlmittelkreislaufs 27 zirkuliert. Das in ausreichendem Maße erwärmte Kühlmittel, das in diesem ersten Kühlmittelkreislauf 27 strömt, wird dann genutzt, um Wärmeenergie in dem Kühlmittel-Kältemittel-Wärmetauscher 9 auf ein Kältemittel einer Kreisprozessvorrichtung des Klimageräts zu übertragen, die dabei als Wärmepumpe betrieben werden kann, um Luft, die einem Innenraum des Kraftfahrzeugs 1 zugeführt werden soll, möglichst gut zu erwärmen.

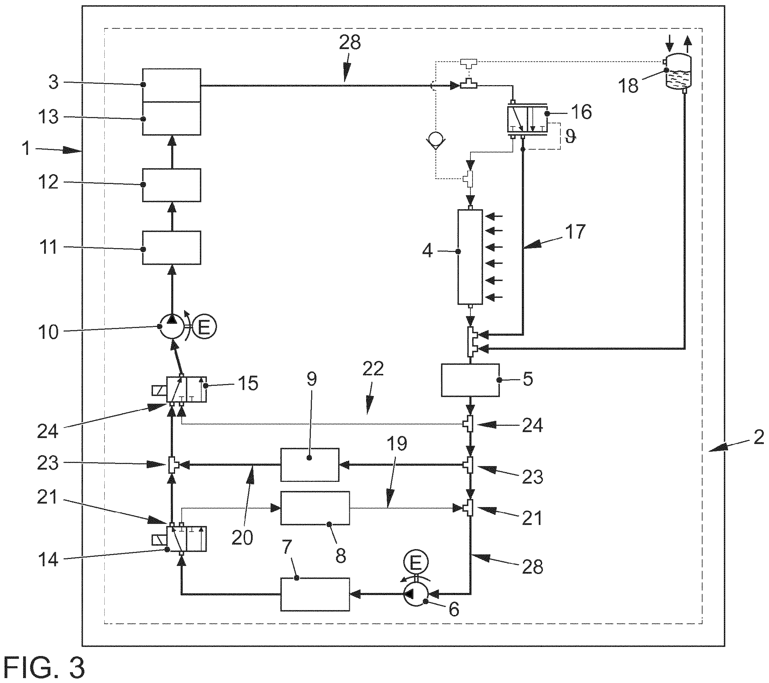

Bei einem Betrieb des Kühlsystems basierend auf der fünften Funktionsstellung des Verteilsystems gemäß der Fig. 3 wird Kühlmittel mittels der beiden Kühlmittelpumpen 6, 10 in einem dem Hauptkreis bei aktiviertem Bypass entsprechenden, siebten Kühlmittelkreislauf 28 gefördert. Gleichzeitig kann eine relativ geringe, jedoch nicht unbedeutende Menge von Kühlmittel über die zweite Kurzschlussleitung 26 und den darin integrierten Kühlmittel-Kältemittel-Wärmetauscher 9 strömen. Da bei einem solchen Betrieb des Kühlsystems jedoch das Klimagerät deaktiviert sein kann, erfolgt dann kein oder nur ein unbedeutender Übergang von Wärmeenergie von dem Kühlmittel auf das Kältemittel des Klimageräts. Ein solcher Betrieb des Kühlsystems kann sich an einen Betrieb basierend auf der ersten Funktionsstellung gemäß der Fig. 2 anschließen, wenn für die Traktionsbatterie 7 bereits ein Kühlleistungsbedarf besteht und gleichzeitig der Traktionsmotor 3, die Leistungselektronik 13 und/oder der DC-DC-Wandler 5 noch nicht einen jeweils vorgesehenen Betriebstemperaturbereich erreicht hat/haben, so dass Wärmeenergie, die bei der Durchströmung von Kühlkanälen der Traktionsbatterie 7 auf das den siebten Kühlmittelkreislauf 28 durchströmende Kühlmittel übergeht, zum Aufwärmen dieser Komponenten genutzt werden kann.

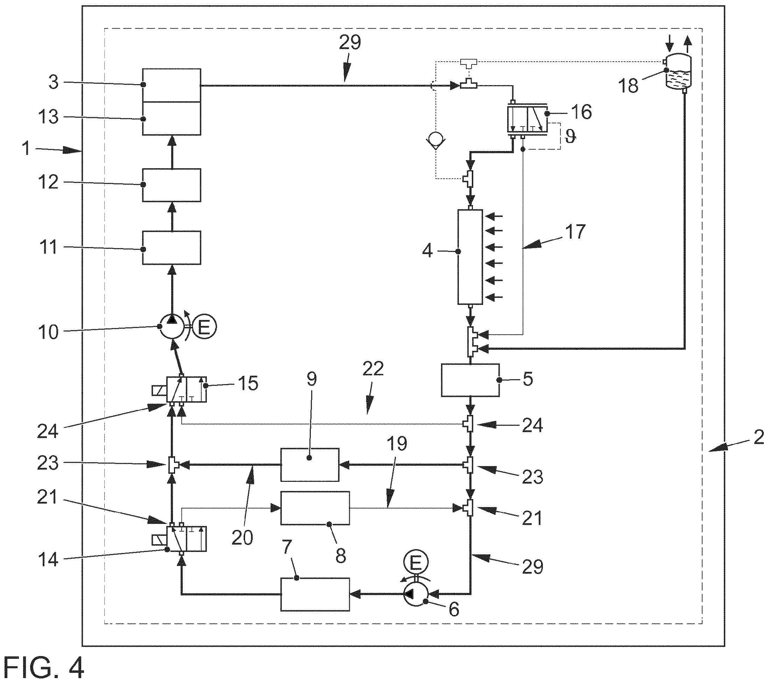

An einen Betrieb des Kühlsystems basierend auf der fünften Funktionsstellung des Verteilsystems gemäß der Fig. 3 kann sich ein Betrieb basierend auf einer vierten Funktionsstellung gemäß der Fig. 4 anschließen. Dieser unterscheidet sich von demjenigen gemäß der Fig. 3 lediglich dahingehend, dass das Kühlmittel nunmehr zumindest teilweise und vorzugsweise vollständig über den Umgebungswärmetauscher 4 geführt wird. Sämtliche der zu kühlenden Komponenten, die in das Kühlsystem integriert sind, werden dann mittels desselben Kühlmittels, das bei einer Durchströmung eines entsprechenden sechsten Kühlmittelkreislaufs 29 seriell durch diese Komponenten geführt wird, gekühlt und die dabei auf das Kühlmittel übertragene Wärmeenergie wird, sofern diese nicht teilweise durch ein Betreiben des Klimageräts zum Beheizen des Innenraums des Kraftfahrzeugs genutzt wird, als Abwärme über den Umgebungswärmetauscher 4 an die Umgebungsluft abgegeben.

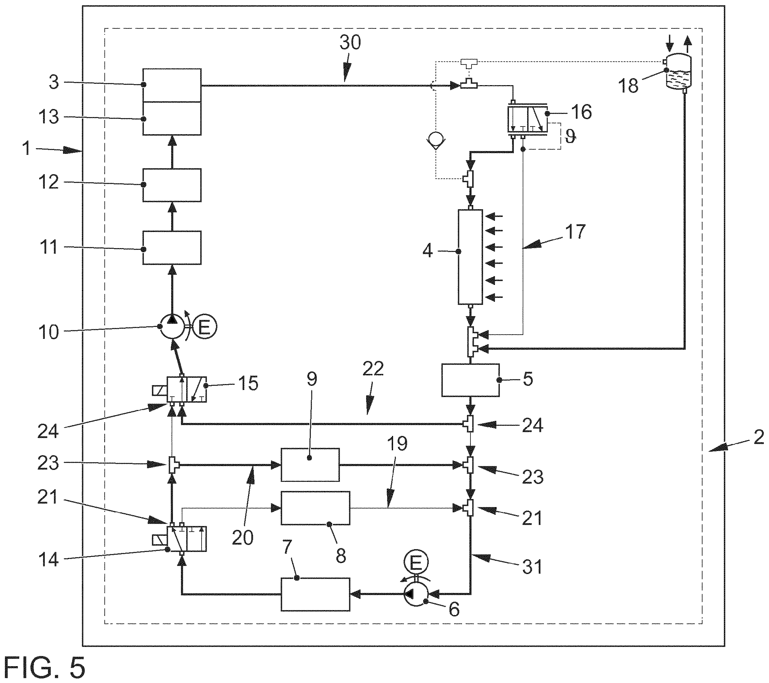

Ein Betrieb des Kühlsystems basierend auf der vierten Funktionsstellung gemäß der Fig. 4 kann, in Abhängigkeit von der Leistungsanforderung an den Traktionsmotor 3 und damit auch an die Traktionsbatterie 7 sowie in Abhängigkeit von der Umgebungstemperatur, dauerhaft beziehungsweise als Normalbetriebsart vorgesehen sein, nachdem die zu kühlenden Komponenten des Kühlsystems ihre jeweiligen vorgesehenen Betriebstemperaturbereiche erreicht haben. Andererseits kann die Kühlleistung, die bei einem Betrieb basierend auf der vierten Funktionsstellung gemäß der Fig. 4 für die Traktionsbatterie 7 erzielbar ist, bei einer relativ hohen Umgebungstemperatur und/oder bei einer relativ hohen Kühlleistungsanforderung an den Traktionsmotor und die Traktionsbatterie zumindest temporär nicht ausreichend sein, um den oberen Grenzwert des für die Traktionsbatterie 7 vorgesehenen Betriebstemperaturbereichs einzuhalten. In diesem Fall kann auf einen Betrieb des Kühlsystems basierend auf der zweiten Funktionsstellung des Verteilsystems gemäß der Fig. 5 umgeschaltet werden. Dann wird durch ein entsprechendes Umschalten des zweiten Schaltventils 15 Kühlmittel mittels der ersten Kühlmittelpumpe 10 in einem neben der ersten Kühlmittelpumpe 15 ausschließlich noch die Hochtemperatur-Kühlkomponenten und den Umgebungswärmetauscher 4 umfassenden dritten Kühlmittelkreislauf 30 gefördert sowie weiterhin Kühlmittel mittels der zweiten Kühlmittelpumpe 14 in einem die Traktionsbatterie 7 und den Kühlmittel-Kältemittel-Wärmetauscher 9 umfassenden vierten Kühlmittelkreislauf 31, der von dem dritten Kühlmittelkreislauf 30 getrennt ist, gefördert. Das den Kühlmittel-Kältemittel-Wärmetauscher 9 umfassende Klimagerät wird dabei gleichzeitig als Kältemaschine betrieben und dadurch eine besonders hohe Kühlleistung zur Kühlung der Traktionsbatterie 7 generiert.

### BEZUGSZEICHENLISTE

- 1: Kraftfahrzeug
- 2: Kühlsystem
- 3: Traktionsmotor
- 4: Umgebungswärmetauscher
- 5: DC-DC-Wandler
- 6: zweite Kühlmittelpumpe
- 7: Traktionsbatterie
- 8: Kühlmittelheizvorrichtung
- 9: Kühlmittel-Kältemittel-Wärmetauscher
- 10: erste Kühlmittelpumpe
- 11: erstes Ladegerät
- 12: zweites Ladegerät
- 13: Leistungselektronik
- 14: erstes Schaltventil
- 15: zweites Schaltventil
- 16: Thermostatventil
- 17: Bypass zu dem Umgebungswärmetauscher
- 18: Ausgleichsbehälter
- 19: erste Kurzschlussleitung
- 20: zweite Kurzschlussleitung
- 21: Verzweigung zu der ersten Kurzschlussleitung
- 22: dritte Kurzschlussleitung
- 23: Verzweigung zu der zweiten Kurzschlussleitung
- 24: Verzweigung zu der dritten Kurzschlussleitung
- 25: fünfter Kühlmittelkreislauf
- 26: zweiter Kühlmittelkreislauf
- 27: erster Kühlmittelkreislauf
- 28: siebter Kühlmittelkreislauf
- 29: sechster Kühlmittelkreislauf
- 30: dritter Kühlmittelkreislauf
- 31: vierter Kühlmittelkreislauf

## Patentansprüche

1. Kraftfahrzeug (1) mit einem Kühlsystem, das
- einen elektrischen Traktionsmotor (3),
- einen Umgebungswärmetauscher (4),
- eine Traktionsbatterie (7),
- eine Kühlmittelheizvorrichtung (8),
- einen Kühlmittel-Kältemittel-Wärmetauscher (9) eines Klimageräts,
- eine erste Kühlmittelpumpe (10) und
- eine zweite Kühlmittelpumpe (6)
umfasst, die über Kühlmittelleitungen und ein Verteilsystem direkt oder indirekt miteinander verbunden oder verbindbar sind,
**dadurch gekennzeichnet, dass** das Kühlsystem einen Bypass (17) zum Umgebungswärmetauscher (4) umfasst und dass
- in einer ersten Funktionsstellung des Verteilsystems
- Kühlmittel mittels der ersten Kühlmittelpumpe (10) in einem den Traktionsmotor (3), den Bypass (17) zu dem Umgebungswärmetauscher (4) und den Kühlmittel-Kältemittel-Wärmetauscher (9) umfassenden ersten Kühlmittelkreislauf (27) förderbar ist sowie
- Kühlmittel mittels der zweiten Kühlmittelpumpe (6) in einem die Traktionsbatterie (7) und die Kühlmittelheizvorrichtung (8) umfassenden zweiten Kühlmittelkreislauf (26), der von dem ersten Kühlmittelkreislauf (27) getrennt ist, förderbar ist und
- in einer zweiten Funktionsstellung des Verteilsystems
- Kühlmittel mittels der ersten Kühlmittelpumpe (10) in einem den Traktionsmotor (3) und den Umgebungswärmetauscher (4) umfassenden dritten Kühlmittelkreislauf (30) förderbar ist sowie
- Kühlmittel mittels der zweiten Kühlmittelpumpe (6) in einem die Traktionsbatterie (7) und den Kühlmittel-Kältemittel-Wärmetauscher (9) umfassenden vierten Kühlmittelkreislauf (31), der von dem dritten Kühlmittelkreislauf (30) getrennt ist, förderbar ist.

2. Kraftfahrzeug (1) gemäß Anspruch 1, **dadurch gekennzeichnet, dass** in einer dritten Funktionsstellung des Verteilsystems
- Kühlmittel mittels der ersten Kühlmittelpumpe (10) in einem den Traktionsmotor (3) und den Bypass (17) zu dem Umgebungswärmetauscher (4) umfassenden fünften Kühlmittelkreislauf (25) förderbar ist, sowie
- Kühlmittel mittels der zweiten Kühlmittelpumpe (6) in dem zweiten Kühlmittelkreislauf (26), der von dem fünften Kühlmittelkreislauf (25) getrennt ist, förderbar ist.

3. Kraftfahrzeug (1) gemäß Anspruch 1 oder 2, **dadurch gekennzeichnet, dass** in einer vierten Funktionsstellung des Verteilsystems Kühlmittel mittels der ersten Kühlmittelpumpe (10) und der zweiten Kühlmittelpumpe (6) in einem den Traktionsmotor (3), den Umgebungswärmetauscher (4) und die Traktionsbatterie (7) umfassenden sechsten Kühlmittelkreislauf (29) förderbar ist.

4. Kraftfahrzeug (1) gemäß einem der vorhergehenden Ansprüche, **dadurch gekennzeichnet, dass** in einer fünften Funktionsstellung des Verteilsystems Kühlmittel mittels der ersten Kühlmittelpumpe (10) und der zweiten Kühlmittelpumpe (6) in einem den Traktionsmotor (3), den Bypass (17) zu dem Umgebungswärmetauscher (4) und die Traktionsbatterie (7) umfassenden siebten Kühlmittelkreislauf (28) förderbar ist.

5. Kraftfahrzeug (1) gemäß einem der vorhergehenden Ansprüche, **gekennzeichnet durch**
- einen den Traktionsmotor (3), die Kombination aus Umgebungswärmetauscher (4) und dazugehörigem Bypass (17), die Traktionsbatterie (7), die erste Kühlmittelpumpe (10) und die zweite Kühlmittelpumpe (6) in Reihe integrierenden Hauptkreis und
- eine die Kühlmittelheizvorrichtung (8) integrierende erste Kurzschlussleitung (19), die einen die Traktionsbatterie (7) und die zweite Kühlmittelpumpe (6) integrierenden Abschnitt des Hauptkreises überbrückt, und
- eine den Kühlmittel-Kältemittel-Wärmetauscher (9) integrierende zweite Kurzschlussleitung (20), die einen die Traktionsbatterie (7), die zweite Kühlmittelpumpe (6) sowie die Verzweigungen (21) zu der ersten Kurzschlussleitung (19) integrierenden Abschnitt des Hauptkreises überbrückt,
wobei in zumindest eine Verzweigung (21, 23) zu der ersten Kurzschlussleitung (19) und/oder zu der zweiten Kurzschlussleitung (20) eine erste Verteilvorrichtung des Verteilsystems integriert ist.

6. Kraftfahrzeug (1) gemäß Anspruch 2 oder einem der von Anspruch 2 abhängigen Ansprüche und gemäß Anspruch 5, **gekennzeichnet durch** eine dritte Kurzschlussleitung (22), die einen die Traktionsbatterie (7), die zweite Kühlmittelpumpe (6), die Verzweigungen (21) zu der ersten Kurzschlussleitung (19) und die Verzweigungen (23) zu der zweiten Kurzschlussleitung (20) integrierenden Abschnitt des Hauptkreises überbrückt.

7. Kraftfahrzeug (1) gemäß Anspruch 6, **dadurch gekennzeichnet, dass** in zumindest eine Verzweigung (24) zu der dritten Kurzschlussleitung (22) eine zweite Verteilvorrichtung des Verteilsystems integriert ist.

8. Kraftfahrzeug (1) gemäß einem der vorhergehenden Ansprüche, **gekennzeichnet durch** eine Ausgestaltung als Elektrofahrzeug.

9. Verfahren zum Betreiben eines Kraftfahrzeugs (1) gemäß einem der vorhergehenden Ansprüche, **dadurch gekennzeichnet, dass**
- in der ersten Funktionsstellung des Verteilsystems Wärmeenergie, die in dem Kühlmittel-Kältemittel-Wärmetauscher (9) von dem den ersten Kühlmittelkühlkreislauf (27) durchströmenden Kühlmittel auf ein Kältemittel des Klimageräts übergeht, zum Heizen eines Innenraums des Kraftfahrzeugs (1) genutzt wird und/oder
- in der zweiten Funktionsstellung des Verteilsystems Wärmeenergie, die in dem Kühlmittel-Kältemittel-Wärmetauscher (9) von dem den vierten Kühlmittelkühlkreislauf (31) durchströmenden Kühlmittel auf das Kältemittel des Klimageräts übergeht, zum Kühlen der Traktionsbatterie (7) genutzt wird.

## Claims

1. Motor vehicle (1) having a cooling system which comprises
- an electric traction motor (3),
- an ambient heat exchanger (4),
- a traction battery (7),
- a coolant heating apparatus (8),
- a coolant/refrigerant heat exchanger (9) of an air-conditioning device,
- a first coolant pump (10) and
- a second coolant pump (6)
which are or can be directly or indirectly connected to one another via coolant lines and a distribution system, **characterized in that** the cooling system comprises a bypass (17) to the ambient heat exchanger (4), and **in that**
- in a first functional position of the distribution system
- coolant can be conveyed by means of the first coolant pump (10) in a first coolant circuit (27) that comprises the traction motor (3), the bypass (17) to the ambient heat exchanger (4) and the coolant/refrigerant heat exchanger (9), and
- coolant can be conveyed by means of the second coolant pump (6) in a second coolant circuit (26) that comprises the traction battery (7) and the coolant heating apparatus (8) and is separated from the first coolant circuit (27), and
- in a second functional position of the distribution system
- coolant can be conveyed by means of the first coolant pump (10) in a third coolant circuit (30) that comprises the traction motor (3) and the ambient heat exchanger (4), and
- coolant can be conveyed by means of the second coolant pump (6) in a fourth coolant circuit (31) that comprises the traction battery (7) and the coolant/refrigerant heat exchanger (9) and is separated from the third coolant circuit (30).

2. Motor vehicle (1) according to Claim 1, **characterized in that** in a third functional position of the distribution system,
- coolant can be conveyed by means of the first coolant pump (10) in a fifth coolant circuit (25) that comprises the traction motor (3) and the bypass (17) to the ambient heat exchanger (4), and
- coolant can be conveyed by means of the second coolant pump (6) in the second coolant circuit (26) that is separated from the fifth coolant circuit (25).

3. Motor vehicle (1) according to Claim 1 or 2, **characterized in that** in a fourth functional position of the distribution system coolant can be conveyed by means of the first coolant pump (10) and the second coolant pump (6) in a sixth coolant circuit (29) that comprises the traction motor (3), the ambient heat exchanger (4) and the traction battery (7).

4. Motor vehicle (1) according to one of the preceding claims, **characterized in that** in a fifth functional position of the distribution system coolant can be conveyed by means of the first coolant pump (10) and the second coolant pump (6) in a seventh coolant circuit (28) that comprises the traction motor (3), the bypass (17) to the ambient heat exchanger (4) and the traction battery (7).

5. Motor vehicle (1) according to one of the preceding claims, **characterized by**
- a main circuit that integrates the traction motor (3), the combination comprising the ambient heat exchanger (4) and the associated bypass (17), the traction battery (7), the first coolant pump (10) and the second coolant pump (6) in series, and
- a first short-circuiting line (19) that integrates the coolant heating apparatus (8) and bridges a portion of the main circuit that integrates the traction battery (7) and the second coolant pump (6), and
- a second short-circuiting line (20) that integrates the coolant/refrigerant heat exchanger (9) and bridges a portion of the main circuit that integrates the traction battery (7), the second coolant pump (6) and also the branches (21) to the first short-circuiting line (19),
wherein a first distribution apparatus of the distribution system is integrated in at least one branch (21, 23) to the first short-circuiting line (19) and/or to the second short-circuiting line (20).

6. Motor vehicle (1) according to Claim 2 or one of the claims that are dependent on Claim 2 and according to Claim 5, **characterized by** a third short-circuiting line (22) that bridges a portion of the main circuit that integrates the traction battery (7), the second coolant pump (6), the branches (21) to the first short-circuiting line (19) and the branches (23) to the second short-circuiting line (20).

7. Motor vehicle (1) according to Claim 6, **characterized in that** a second distribution apparatus of the distribution system is integrated in at least one branch (24) to the third short-circuiting line (22).

8. Motor vehicle (1) according to one of the preceding claims, **characterized by** a configuration as an electric vehicle.

9. Method for operating a motor vehicle (1) according to one of the preceding claims, **characterized in that**
- in the first functional position of the distribution system thermal energy, which passes from the coolant flowing through the first coolant cooling circuit (27) to a refrigerant of the air-conditioning device in the coolant/refrigerant heat exchanger (9), is used for heating an interior of the motor vehicle (1) and/or
- in the second functional position of the distribution system thermal energy, which passes from the coolant flowing through the fourth coolant cooling circuit (31) to the refrigerant of the air-conditioning device, is used for cooling the traction battery (7).

## Revendications

1. Véhicule automobile (1) pourvu d'un système de refroidissement, comprenant
- un moteur de traction électrique (3),
- un échangeur de chaleur ambiante (4),
- une batterie de traction (7),
- un dispositif de chauffage de produit réfrigérant (8),
- un échangeur de chaleur de liquide de refroidissement/ fluide frigorigène (9) d'un climatiseur,
- une première pompe à liquide de refroidissement (10), et
- une deuxième pompe à liquide de refroidissement (6),
qui sont ou peuvent être reliés les uns aux autres directement ou indirectement par des conduites de liquide de refroidissement et un système de distribution,
**caractérisé en ce que** le système de refroidissement comprend une dérivation (17) vers l'échangeur de chaleur ambiante (4), et **en ce que**
- dans une première position fonctionnelle du système de distribution,
- du liquide de refroidissement peut être débité au moyen de la première pompe à liquide de refroidissement (10) dans un premier circuit de liquide de refroidissement (27) comprenant le moteur de traction (3), la dérivation (17) vers l'échangeur de chaleur ambiante (4) et l'échangeur de chaleur à liquide de refroidissement/ fluide frigorigène (9), et
- du liquide de refroidissement peut être débité au moyen de la deuxième pompe à liquide de refroidissement (6) dans un deuxième circuit de liquide de refroidissement (26) comprenant la batterie de traction (7) et le dispositif de chauffage de liquide de refroidissement (8) et qui est séparé du premier circuit de liquide de refroidissement (27), et
- dans une deuxième position fonctionnelle du système de distribution,
- du liquide de refroidissement peut être débité au moyen de la première pompe à liquide de refroidissement (10) dans un troisième circuit de liquide de refroidissement (30) comprenant le moteur de traction (3) et l'échangeur de chaleur ambiante (4), et
- du liquide de refroidissement peut être débité au moyen de la deuxième pompe à liquide de refroidissement (6) dans un quatrième circuit de liquide de refroidissement (31) comprenant la batterie de traction (7) et l'échangeur de chaleur à liquide de refroidissement/ fluide frigorigène (9) et qui est séparé du troisième circuit de liquide de refroidissement (30).

2. Véhicule automobile (1) selon la revendication 1, **caractérisé en ce que** dans une troisième position fonctionnelle du système de distribution,
- du liquide de refroidissement peut être débité au moyen de la première pompe à liquide de refroidissement (10) dans un cinquième circuit de liquide de refroidissement (25) comprenant le moteur de traction (3) et la dérivation (17) vers l'échangeur de chaleur ambiante (4), et
- liquide de refroidissement peut être débité au moyen de la deuxième pompe à liquide de refroidissement (6) dans le deuxième circuit de liquide de refroidissement (26) qui est séparé du cinquième circuit de liquide de refroidissement (25).

3. Véhicule automobile (1) selon la revendication 1 ou 2, **caractérisé en ce que** dans une quatrième position fonctionnelle du système de distribution, du liquide de refroidissement peut être débité au moyen de la première pompe à liquide de refroidissement (10) et de la deuxième pompe à liquide de refroidissement (6) dans un sixième circuit de liquide de refroidissement (29) comprenant le moteur de traction (3), l'échangeur de chaleur ambiante (4) et la batterie de traction (7).

4. Véhicule automobile (1) selon l'une quelconque des revendications précédentes, **caractérisé en ce que** dans une cinquième position fonctionnelle du système de distribution, du liquide de refroidissement peut être débité au moyen de la première pompe à liquide de refroidissement (10) et de la deuxième pompe à liquide de refroidissement (6) dans un septième circuit de liquide de refroidissement (28) comprenant le moteur de traction (3), la dérivation (17) vers l'échangeur de chaleur ambiante (4) et la batterie de traction (7).

5. Véhicule automobile (1) selon l'une quelconque des revendications précédentes, **caractérisé par**
- un circuit principal intégrant en série le moteur de traction (3), la combinaison de l'échangeur de chaleur ambiante (4) et de la dérivation (17) associée, la batterie de traction (7), la première pompe à liquide de refroidissement (10) et la deuxième pompe à liquide de refroidissement (6), et
- une première conduite de court-circuit (19) intégrant le dispositif de chauffage de liquide de refroidissement (8) et qui court-circuite une partie du circuit principal intégrant la batterie de traction (7) et la deuxième pompe à liquide de refroidissement (6), et
- une deuxième conduite de court-circuit (20) intégrant l'échangeur de chaleur à liquide de refroidissement/ fluide frigorigène (9) et qui court-circuite une partie du circuit principal intégrant la batterie de traction (7), la deuxième pompe à liquide de refroidissement (6) ainsi que les branchements (21) vers la première conduite de court-circuit (19),
un premier dispositif de distribution du système de distribution étant intégré dans au moins un branchement (21, 23) vers la première conduite de court-circuit (19) et/ou vers la deuxième conduite de court-circuit (20).

6. Véhicule automobile (1) selon la revendication 2 ou l'une des revendications dépendant de la revendication 2 et selon la revendication 5, **caractérisé par** une troisième conduite de court-circuit (22) qui court-circuite une partie du circuit principal intégrant la batterie de traction (7), la deuxième pompe à liquide de refroidissement (6), les branchements (21) vers la première conduite de court-circuit (19) et les branchements (23) vers la deuxième conduite de court-circuit (20).

7. Véhicule automobile (1) selon la revendication 6, **caractérisé en ce qu'**un deuxième dispositif de distribution du système de distribution est intégré dans au moins un branchement (24) vers la troisième conduite de court-circuit (22).

8. Véhicule automobile (1) selon l'une quelconque des revendications précédentes, **caractérisé par** une configuration sous forme de véhicule électrique.

9. Procédé d'exploitation d'un véhicule automobile (1) selon l'une quelconque des revendications précédentes, **caractérisé en ce que**
- dans la première position fonctionnelle du système de distribution, de l'énergie thermique qui passe dans l'échangeur de chaleur à liquide de refroidissement/ fluide frigorigène (9) du liquide de refroidissement s'écoulant par le premier circuit de refroidissement de liquide de refroidissement (27) à un fluide frigorigène du climatiseur, est utilisée pour chauffer un habitacle du véhicule automobile (1), et/ou
- dans une deuxième position fonctionnelle du système de distribution, de l'énergie thermique qui passe dans l'échangeur de chaleur de liquide de refroidissement/ fluide frigorigène (9) du liquide de refroidissement s'écoulant par le quatrième circuit de refroidissement de liquide de refroidissement (31) au fluide frigorigène du climatiseur, est utilisée pour refroidir la batterie de traction (7).
